# EUROPÄISCHE PATENTSCHRIFT

(11) **EP 1 262 370 B1**
(45) Veröffentlichungstag und Bekanntmachung des Hinweises auf die Patenterteilung: **07.07.2004**
(21) Anmeldenummer: 02009202.9
(22) Anmeldetag: 24.04.2002
(51) Int. Cl.: B60R 11/02

(54) **Handy-Halterung für ein Fahrzeug**
Device for holding a mobile phone in a car
Support pour fixer un téléphone portable dans un véhicule

(30) Priorität: 29.05.2001 DE 10125983
(43) Veröffentlichungstag der Anmeldung: 04.12.2002
(73) Patentinhaber: Volkswagen Aktiengesellschaft, 38436 Wolfsburg (DE)
(72) Erfinder: Hackenberg, Ulrich, Dr., 85139 Wettstetten (DE); Strutz, Torsten, Dr., 38442 Wolfsburg (DE); Beil, Frank, Dr., 38110 Braunschweig (DE)

(56) Entgegenhaltungen:
- DE-U- 29 714 627
- DE-U- 29 814 956

## Beschreibung

Die Erfindung betrifft eine Handy-Halterung für ein Fahrzeug zur Aufbewahrung und Bereithaltung eines Handys für einen Fahrzeuginsassen, insbesondere den Fahrer.

Um Handys in einem Fahrzeug sicher zu haltern und diese in einer Bereitschaftsposition in Griffnähe für einen Fahrzeuginsassen, insbesondere jedoch den Fahrer, bereit zu halten, sind Handy-Halterungen bekannt, die ein Herausnehmen des Handys aus diesen und ein Einlegen in diese, verbunden mit einer Arretierung, ermöglichen. Derartige Handy-Halterungen sind beispielsweise in der DE 297 14 627 U1, der DE 197 18 761 U1 und der DE 298 14 956 U1 beschrieben.

Die Handy-Halterung nach der DE 298 14 956 U1, die dem Oberbegriff des Anspruchs 1 entspricht weist ein Grundteil zur permanenten Befestigung im Fahrzeug und ein an diesem temporär festlegbares Handy-Halteteil (Adapter) auf. Die Festlegung des Adapters ist durch Schnapp-Verrastungsmittel ermöglicht. Der Adapter ist mit dem Handy derart kombiniert, daß diese gemeinsam als handliche Einheit gehandhabt, d.h. in die Hand genommen werden können. Vorzugsweise ist der Adapter auch mit einer Freisprecheinrichtung kombiniert und weist dazu entsprechende, an das jeweilige Handy angepaßte elektronische und mechanische Elemente und Komponenten auf. Wenn der Adapter mit dem Handy am Grundteil angeordnet ist, ist die Freisprecheinrichtung aktiviert und bei vom Grundteil gelöstem Adapter deaktiviert. Eines von den am Grundteil ausgebildeten Verrastungsmitteln zur Festlegung des Adapters ist als ein in Fahrzeuglängsrichtung vorn anzuordnendes Anschlagelement vorgesehen und starr ausgebildet und dient im Zusammenwirken mit wenigstens einem federnden Haken-Rast-Element bei einem Aufprall zugleich als Aufprallsicherung für den Adapter, so daß sich dieser nicht vom Grundteil lösen kann. Zum Festlegen des Adapters am Grundteil muß dieser mit einer Ausnehmung mit dem starren Anschlagelement in Eingriff gebracht, auf das Grundteil zu geschwenkt und gegen das federnde Haken-Rast-Element gedrückt werden. Zum Lösen der Verrastung und Entnehmen des Adapters mit dem an diesem arretierten Handy müssen eine Verschiebebewegung in Richtung auf das federnde Haken-Rast-Element- und anschließend eine Schwenkbewegung in Bezug auf das Grundteil ausgeführt werden.

Die Handy-Halterung nach der DE 297 14 627 U1 weist ein am Fahrzeug festlegbares Grundteil und einen Adapter auf, der mittels einer Verriegelungseinrichtung am Grundteil lösbar verriegelbar ist. Dazu sind am Grundteil ein Sperriegel, der mit einer am Adapter ausgebildeten Öffnung in eine Verriegelungsstellung bringbar ist, und ein Entriegelungsschieber angeordnet, mit dem der Sperriegel in eine Freigabestellung verschwenkt werden kann. Zur Stabilisierung der Verriegelungsstellung sind Federmittel vorgesehen. Die Verriegelung stellt die Crashfestigkeit der Anordnung sicher. Eine Entnahme des Adapters mit dem Handy erfordert, wie schon bei der vorstehend beschriebenen Handy-Halterung, die Aufmerksamkeit des Nutzers, insbesondere Fahrers, da dieser den Entriegelungsschieber betätigen muß.

Es ist Aufgabe der Erfindung, eine Handy-Halterung für ein Fahrzeug nach dem Oberbegriff des Anspruchs 1 derart zu gestalten, daß die Entnahme und das Wiedereinlegen des mit einem Adapter verbundenen Handys bei sichergestellter Aufprallfestigkeit erleichtert erfolgen kann.

Diese Aufgabe wird bei einer Handy-Halterung nach dem Oberbegriff des Anspruchs 1 durch dessen kennzeichnenden Merkmale gelöst. Vorteilhafte Ausgestaltungen sind in den nachfolgenden Unteransprüchen aufgeführt.

Die Erfindung besteht darin, daß bei einer Handy-Halterung für ein Fahrzeug, die ein am Fahrzeug fest oder bewegbar angeordnetes Basisteil und einen an diesem lösbar anordbaren Adapter aufweist, an dem das Handy gehalten ist und der in dessen Nichtgebrauchsstatus in einer vorbestimmten Stellung am Basisteil arretiert ist, das Basisteil und der Adapter miteinander korrespondierende Anschlagelemente zur gegenseitigen Arretierung aufweisen und zwischen dem arretierten Adapter und dem Basisteil eine Verriegelungseinrichtung ausgebildet ist, die bei einem Aufprall aktiviert wird und den Adapter am Basisteil fixiert. Diese Lösung ermöglicht es, den Adapter und das mit diesem verbundene Handy durch einfaches Abnehmen vom und einfaches Wiederauflegen auf das Basisteil zu handhaben, wobei das Wiederauflegen in die durch die Arretierungselemente vorbestimmte Stellung problemlos und ohne nennenswerte Aufmerksamkeit erfolgen kann. Überdies ist das Handy im Falle eines Aufpralls am fahrzeugfesten Basisteil fixiert, so daß es sich nicht verselbständigen und eine Gefahr für die Fahrzeuginsassen werden kann. Der Adapter kann auch mit einer Freisprecheinrichtung kombinierbar ausgebildet sein und entsprechende, an das Handy angepaßte elektronische und mechanische Elemente und Komponenten aufweisen.

Vorteilhaft ist das am Adapter angeordnete Anschlagelement ein Ansatz mit einem runden oder polygonen Querschnitt und das am Basisteil ausgebildete Anschlagelement ein mit diesem korrespondierender Aufnahmeschacht. Der Fläche des sonst die gleiche Form wie der Ansatzquerschnitt aufweisenden Querschnitts des Aufnahmeschachtes ist dabei etwas größer als die des Ansatzes, so daß dieser problemlos in den Aufnahmeschacht eingeführt werden kann. Dabei sind beide Anschlagelemente derart ausgebildet, daß der Ansatz wenigstens so tief in den Aufnahmeschacht eingreift, daß der Adapter nur durch eine zunächst axiale Bewegung, bezogen auf den Aufnahmeschacht, aus diesem gezogen werden kann, damit der Adapter bei einer starken Verzögerung des Fahrzeugs und gegebenenfalls bei einem Aufprall auftretenden Stößen nicht schon alleine durch eine quer zur Achse des Aufnahmeschachtes wirkende Trägheitskraft aus diesem geschwenkt und vom Basisteil getrennt werden kann. Wenn die Anschlagelemente kreisrund ausgebildet sind, kann das Basisteil vorteilhaft mit einem an wenigstens einer Umfangsseite ausgebildeten hochstehenden Rand zur Anlage des Adapters versehen sein. Dieser Rand stellt eine Verdrehsicherung für den Adapter am Basisteil dar. Zur erleichterten Einführung des Ansatzes in den Aufnahmeschacht zum Anlegen des Adapters mit dem Handy an das Basisteil kann der Aufnahmeschacht mit einer Fase versehen sein.

In bevorzugter Ausführungsform ist die Verriegelungseinrichtung an den Anschlagelementen ausgebildet. Sie kann dabei aus einem am Basisteil angeordneten und mit einer Trägheitsmasse versehenen Sperrglied und einer am Ansatz des Adapters ausgebildeten Ausnehmung für einen Eingriff des Sperrgliedes gebildet sein, wobei das Sperrglied so angeordnet und ausgebildet ist, daß es bei einem Aufprall mit der bei diesem gegebenen hohen Verzögerung infolge seiner Trägheit in die Ausnehmung einfällt und den Ansatz am Basisteil vorübergehend fixiert.

Die Verriegelungseinrichtung kann aber auch aus einem am Basisteil angeordneten und mit einer Trägheitsmasse versehenen Sperrglied und einem am Basisteil angeordneten und in den Ansatz des Adapters eingreifenden Rastriegel mit einer Öffnung gebildet sein, wobei das Sperrglied so angeordnet und ausgebildet ist, daß es bei einem Aufprall des Fahrzeuges infolge seiner Trägheit in die Öffnung am Rastriegel einfällt und diesen blockiert.

Das Basisteil kann in einer im wesentlichen horizontalen oder in einer im wesentlichen vertikalen Ebene, insbesondere am Armaturenbrett, angeordnet sein.

Für ein horizontal angeordnetes Basisteil kann das Sperrglied vorteilhaft ein in einem Führungskanal angeordneter und in diesem verschiebbar gehalterter Stift sein, wobei der Führungskanal im wesentlichen in Fahrzeuglängsrichtung am Basisteil ausgebildet und mit seinem vorderen Ende in den Aufnahmeschacht mündet. Die Trägheitsmasse ist bevorzugt an dem dem Aufnahmeschacht abgewandten Ende des Stiftes angeordnet. Um den Stift im normalen Fahrbetrieb im Führungskanal im Basisteil zu halten, ist der Stift im Bereich der Trägheitsmasse mit einer Rückstellfeder geringer Federkraft verbunden, derart, daß diese bei einem Aufprall durch die Massenträgheit des mit der Trägheitsmasse versehenen Stiftes leicht überwunden wird. Nach dem Aufprall und dem Abbau der Trägheitskraft wird die Verriegelung durch die Rückstellfeder wieder gelöst, indem der Stift durch diese im Führungskanal wieder zurückgezogen wird.

Alternativ dazu kann das Sperrglied ein am Basisteil angeordneter Sperrhebel sein, der mit einem hakenförmigen Ende in eine am Ansatz ausgebildete Ausnehmung einfällt und dort einen als Gegenelement ausgebildeten Wandabschnitt hintergreift und dadurch eine axiale Bewegung des Ansatzes im Aufnahmeschacht verhindert. Dieser Sperrhebel ist im wesentlichen vertikal in einer am Basisteil ausgebildeten und zum Aufnahmeschacht offenen Kammer um eine horizontale Achse schwenkbar angeordnet und weist unterhalb der Schwenkachse im Abstand von dieser eine Trägheitsmasse auf und ist mit einer Rückstellfeder mit einer geringen Federkraft verbunden, derart, daß die Rückstellfeder den Sperrhebel im normalen Fahrbetrieb in Anlage an der dem Ansatz abgewandten Kammerwand in vertikaler Position hält und bei einem Aufprall durch die Massenträgheit leicht überwunden wird, so daß der Sperrhebel mit seinem oberen hakenförmigen Ende in die am Ansatz ausgebildete Ausnehmung einfällt und dort den Wandabschnitt hintergreift und den Ansatz am Basisteil verriegelt. Auch bei dieser Ausführung wird die Verriegelung nach dem Aufprall durch die Rückstellfeder wieder gelöst, wenn die Trägheitskraft nicht mehr wirkt.

Für ein vertikal angeordnetes Basisteil kann das Sperrglied ein am Basisteil in einem im wesentlichen in Fahrzeuglängsrichtung ausgebildeten Führungskanal verschiebbar angeordneter Verriegelungsstift sein, der mit einem in einem am Basisteil ausgebildeten und vertikal angeordneten Führungsschacht verschiebbar gehalterten Rastriegel in Wirkverbindung steht. Dieser weist eine Öffnung auf, die mit dem Führungskanal korrespondiert und ist im Führungsschacht auf einem Druckfederelement abgestützt. Mit seinem oberen Ende ragt der Rastriegel in den Aufnahmeschacht und dort in eine am Ansatz des Adapters ausgebildete Ausnehmung hinein, wodurch dieser mit dem Handy im Aufnahmeschacht lösbar festgelegt ist. An der Trägheitsmasse des Verriegelungsstiftes greift eine Rückstellfeder mit geringer Federkraft an, die diesen im normalen Fahrbetrieb im Führungskanal hält und deren Federkraft bei einem Heckaufprall durch die Massenträgheit überwunden wird, so daß der Verriegelungsstift in die Öffnung am Rastriegel einfällt und diesen blockiert, wodurch der Ansatz am Basisteil vorübergehend fixiert ist.

Die Erfindung wird nachstehend anhand von Ausführungsbeispielen erläutert. In den zugehörigen Zeichnungen zeigen, teilweise schematisch:
- Fig. 1:: eine Handy-Halterung mit einem Handy für eine im wesentlichen horizontale Anordnung in einer Explosionsdarstellung,
- Fig. 2:: einen Vertikalschnitt durch diese Handy-Halterung im Bereich der in dieser angeordneten Verriegelungseinrichtung
- Fig. 3:: einen Vertikalschnitt durch eine Handy-Halterung mit einer anderen Ausführung einer Verriegelungseinrichtung und
- Fig. 4:: einen Vertikalschnitt durch eine Handy-Halterung für eine im wesentlichen vertikale Anordnung.

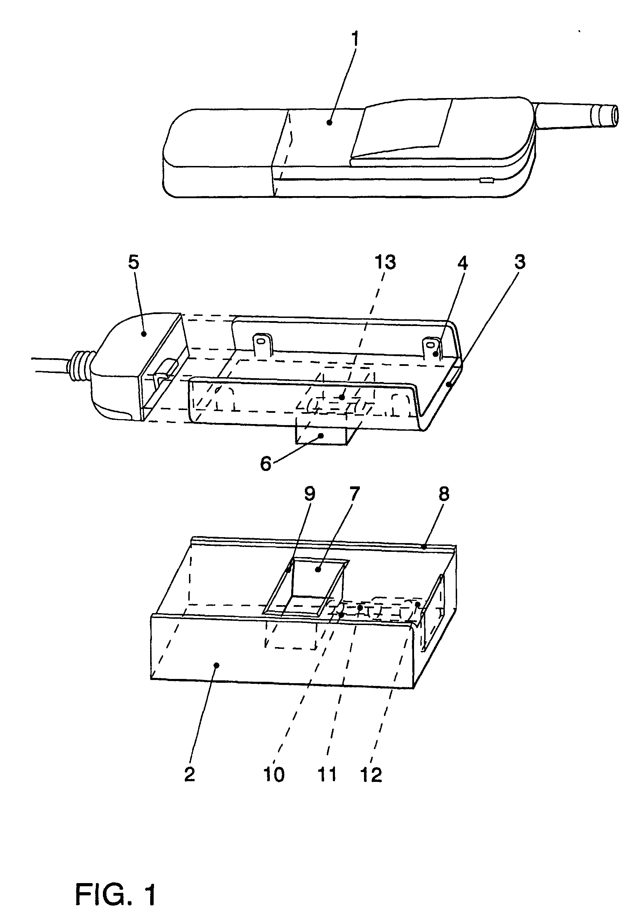

Die in Fig. 1 dargestellte Handy-Halterung für ein Handy 1 weist ein in einem Hohlraum einer Armlehne angeordnetes und an dieser ausschwenkbar (nicht dargestellt) gehaltertes Basisteil 2 und einen an diesem lösbar anordbaren Adapter 3 auf, an dem das Handy 1 mit Klemmelementen 4, ebenfalls lösbar, gehalten ist. Der Adapter 3 ist in bekannter Weise mit einer Kontaktierungseinrichtung 5 einer Freisprecheinrichtung für das Handy 1 versehen. Am Basisteil 2 und am Adapter 3 sind miteinander korrespondierende Anschlagelemente zur gegenseitigen Arretierung angeordnet, von denen das am Adapter 3 angeordnete Anschlagelement ein quaderförmiger Ansatz 6 und das am Basisteil 2 ausgebildete Anschlagelement ein Aufnahmeschacht 7 für den Ansatz 6 ist. Dieser greift mit einer Länge von ca. 10 mm in den Aufnahmeschacht 7 mit geringem Spiel ein. Durch die Gestalt dieser beiden Anschlagelemente 6 und 7 ist die Lage des Adapters 3 am Basisteil 2 eindeutig bestimmt. Überdies weist das Basisteil 2 an zwei gegenüberliegenden Längsseiten hochstehende Ränder 8 auf, zwischen denen der Adapter 3 zur Anordnung gelangt und die zugleich eine Ablagehilfe für ein blindes Ablegen desselben (3) und des mit diesem verbundenen Handys 1 darstellen. Der Aufnahmeschacht 7 ist am oberen Rand mit einer Abfasung 9 als Einführhilfe für den Ansatz 6 versehen.

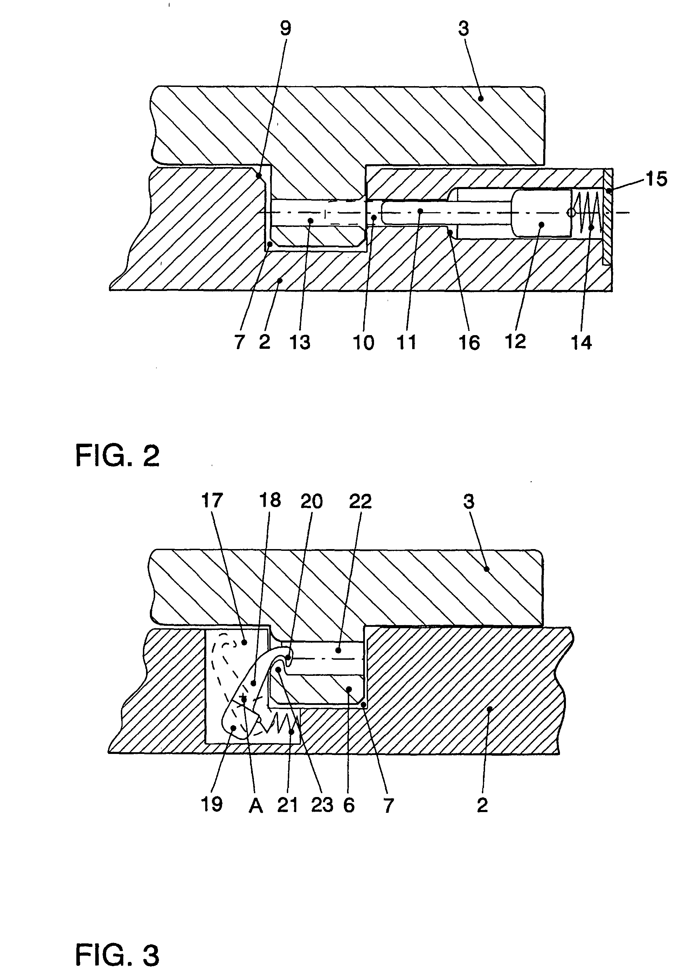

Zwischen dem Basisteil 2 und dem Adapter 3 ist eine Verriegelungseinrichtung zum gegenseitigen Fixieren derselben bei einem Frontalaufprall des Fahrzeugs ausgebildet. Fig. 2 zeigt die in Fig. 1 durch unterbrochene Linien angedeutete Verriegelungseinrichtung in einem Vertikalschnitt. Diese ist aus einem am Basisteil 2 in einem Führungskanal 10 geführten Stift 11 als Sperrglied mit einer an diesem angeordneten zylinderförmigen Trägheitsmasse 12, wobei der Führungskanal 10 in den Aufnahmeschacht 7 mündet, und einer am Ansatz 6 des Adapters 1 angeordneten und mit dem Führungskanal 10 korrespondierenden Öffnung 13 zur Aufnahme des vorderen Teil des Stiftes 11 bei einem Frontalaufprall gebildet. Der Führungskanal 10 ist auf seiner dem Aufnahmeschacht 7 abgewandten Seite aufgeweitet und dient als Führung für die Trägheitsmasse 12. An dieser greift rückseitig eine Rückstellfeder 14 mit geringer Federkraft an, die an einer rückseitig am Basisteil 2 angeordneten Verschlußplatte 15 für den Führungskanal 10 befestigt ist (nicht weiter dargestellt) und die den Stift 11 mit der Trägheitsmasse 12 mit geringer Federkraft an der Verschlußplatte 15 hält.

Im normalen Fahrbetrieb hält die Rückstellfeder 14 den Stift 11 an der Verschlußplatte 15, wobei die zwischen diesem (11) und der Trägheitsmasse 12 einerseits und dem Führungskanal 10 andererseits gegebenen Reibungskräfte unterstützend wirken. Bei einem Frontalaufprall des Fahrzeugs und in im wesentlichen in Fahrzeuglängsrichtung ausgerichtetem Basisteil 2 mit auf diesem abgelegten Adapter 3 wirkt jedoch die um die Trägheitsmasse 12 stark vergrößerte Masse des Stiftes 11 und schiebt diesen in die Öffnung 12 ein, bis die Trägheitsmasse 12 an der Schulter 16 im Führungskanal zum Anschlag kommt. Durch den Eingriff des Stiftes 11 in die Öffnung 13 ist der Ansatz 6 am Basisteil 2 verriegelt.

In Fig. 3 ist eine weitere Ausführung einer Verriegelungseinrichtung dargestellt. Bei dieser ist das Sperrglied ein am Basisteil 2 in einer aufnahmeschachtseitig offenen schlitzartigen Kammer 17 auf der Vorderseite des Ansatzes 6 ein im wesentlichen vertikal angeordneter und um eine horizontale Schwenkachse A drehbarer Schwenkhebel 18. Dieser ist unterhalb der Schwenkachse A mit einer Trägheitsmasse 19 versehen und an seinem oberhalb der Schwenkachse A gegebenen freien Ende zu einem Haken 20 ausgebildet. Eine an der Trägheitsmasse 19 angreifende Rückstellfeder 21 mit geringer Federkraft hält den Sperrhebel 18 in Anlage an der dem Ansatz 6 abgewandten Kammerwand in der vertikalen Position (gestrichelt dargestellt). Der Ansatz 6 weist eine in Längsrichtung des Adapters 3 angeordnete horizontale Öffnung 22 auf, die auf der dem Schwenkhebel 18 zugewandten Seite mit einem hochstehenden Rand 23 versehen ist. Bei einem Frontalaufprall werden die Federkraft der Rückstellfeder 21 durch die Massenträgheit der sich nach vorn bewegenden Trägheitsmasse 19 überwunden, und der Schwenkhebel 18 um die Achse A geschwenkt, so daß der Haken 20 in die Öffnung 22 einfällt und den Rand 23 hintergreift, wodurch der Ansatz 6 am Basisteil 2 verriegelt ist. Nach dem Aufprall und dem Abbau der Trägheitskraft wird die Verriegelung durch die Rückstellfeder 21 wieder gelöst, und der Schwenkhebel 18 durch diese in seine vertikale Position bis zur Anlage an der Kammerwand zurückgeholt, gleichbedeutend mit einer Entriegelung des Ansatzes 6.

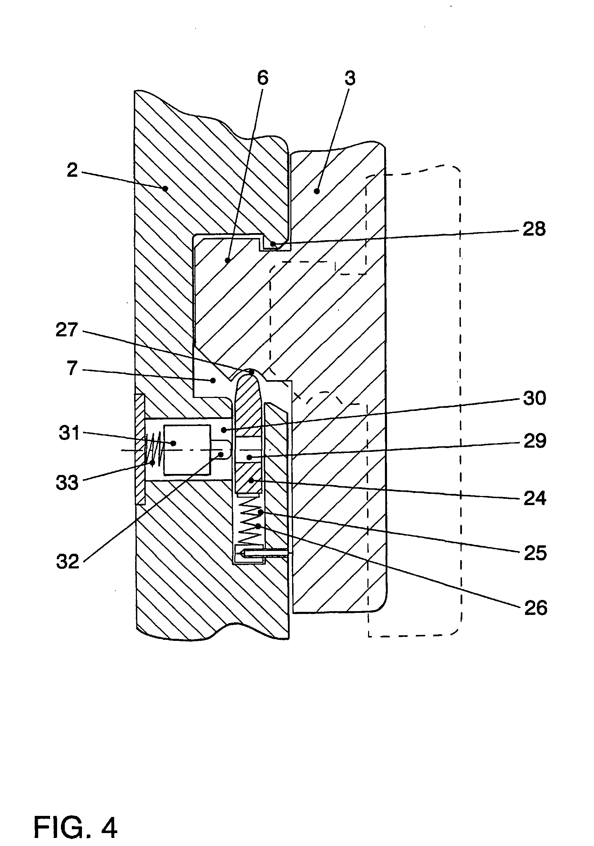

Die in Fig. 4 für eine vertikale Anordnung dargestellte Handy-Halterung weist einen Rastriegel 24 auf, der in einem am Basisteil 2 ausgebildeten vertikal angeordneten Führungsschacht 25 verschiebbar gehaltert und in diesem auf einer Druckfeder 26 abgestützt ist. Dieser Rastriegel 24 ragt mit seinem oberen Ende aus dem aufnahmeschachtseitig offenen Führungsschacht 25 in den Aufnahmeschacht 7 und dort in eine am Ansatz 6 des Adapters 3 ausgebildete Rastausnehmung 27 hinein. Der bis zum Anschlag in den Aufnahmeschacht 7 eingeführte Ansatz 6 hintergreift einen an dessen oberer vorderer Kante ausgebildeten Rastvorsprung 28 und wird in dieser Position durch den Rastriegel 24 gehalten. Durch eine Überwindung der Kraft der Druckfeder 26 infolge Niederdrückens und Herausziehens des Adapters 3 aus dem Aufnahmeschacht 7, wodurch der Rastriegel 24 nochmals niedergedrückt wird, kann der Adapter 3 (mit dem Handy 1) vom Basisteil 2 gelöst werden (gestrichelt dargestellt).

Der Rastriegel 24 ist mit einer Bohrung 29 versehen, die mit einem Führungskanal 30 korrespondiert, in der ein mit einer zylinderförmigen Trägheitsmasse 31 versehener Verriegelungsstift 32 verschiebbar gehaltert ist, wobei die Trägheitsmasse 31, wie bei den vorbeschriebenen Ausführungen, mit einer Rückstellfeder 33 mit einer geringen Federkraft an der Rückseite des Basisteils 2 in einer Ruheposition im Führungskanal 30 gehalten ist. Bei einem Heckaufprall wird deren Federkraft durch die Massenträgheit des mit der Trägheitsmasse 31 versehenen Verriegelungsstiftes 32 überwunden, und dieser fällt in die Bohrung 29 des Rastriegels 24 ein und blockiert diesen in seiner Raststellung, so daß der Ansatz 6 mit dem Adapter 3 am Basisteil 2 festgelegt ist.

Alternativ zu dieser Ausführung kann das Basisteil 2 um 180 Grad verdreht angeordnet werden, so daß der Rastriegel 24 von oben in den Aufnahmeschacht 7 eingreift. Ebenso alternativ kann die Verriegelungseinrichtung gemäß der Ausführung nach Fig. 3 mit einem entsprechend der vertikalen Anordnung gehalterten und mit einer Trägheitsmasse versehenen Schwenkhebel gebildet sein.

### BEZUGSZEICHENLISTE

- 1: Handy
- 2: Basisteil
- 3: Adapter
- 4: Klemmelement
- 5: Kontaktierungseinrichtung
- 6: Ansatz
- 7: Aufnahmeschacht
- 8: Rand
- 9: Abfasung
- 10: Führungskanal
- 11: Stift
- 12: Trägheitsmasse
- 13: Öffnung
- 14: Rückstellfeder
- 15: Verschlußplatte
- 16: Schulter
- 17: Kammer
- 18: Schwenkhebel
- 19: Trägheitsmasse
- 20: Haken
- 21: Rückstellfeder
- 22: Öffnung
- 23: Rand
- 24: Rastriegel
- 25: Führungsschacht
- 26: Druckfeder
- 27: Rastausnehmung
- 28: Rastvorsprung
- 29: Bohrung
- 30: Führungskanal
- 31: Trägheitsmasse
- 32: Verriegelungsstift
- 33: Rückstellfeder
- A: Achse

## Patentansprüche

1. Handy-Halterung für ein Fahrzeug, mit einem mit dem Fahrzeug verbundenen Basisteil und einem an diesem lösbar anordbaren Adapter, an dem das Handy gehalten ist und der im Nichtgebrauchsstatus des Handys am Basisteil in einer vorbestimmten Stellung arretiert ist, **dadurch gekennzeichnet, daß** das Basisteil (2) und der Adapter (3) miteinander korrespondierende Anschlagelemente zur gegenseitigen Arretierung aufweisen, und daß zwischen dem arretierten Adapter (3) und dem Basisteil (2) eine Verriegelungseinrichtung ausgebildet ist, die bei einem Aufprall aktiviert wird und den Adapter (3) am Basisteil (2) festlegt.

2. Handy-Halterung nach Anspruch 1, **dadurch gekennzeichnet, daß** das am Adapter (3) angeordnete Anschlagelement ein auf der dem Basisteil (2) zugewandten Seite ausgebildeter Ansatz (6) mit einem runden oder polygonen Querschnitt und das am Basisteil (2) ausgebildete Anschlagelement ein Aufnahmeschacht (7) für den Ansatz (6) ist, wobei dieser so tief in den Aufnahmeschacht (7) eingreift, daß der Adapter (3) nur durch eine axiale Bewegung, bezogen auf den Aufnahmeschacht (7), vom Basisteil (2) trennbar ist.

3. Handy-Halterung nach Anspruch 1 oder 2, **dadurch gekennzeichnet, daß** das Basisteil (2) bei einem kreisrunden Aufnahmeschacht (7), mit einem an wenigstens einer Umfangsseite ausgebildeten hochstehenden Rand (8) zur Anlage des Adapters (3) versehen ist.

4. Handy-Halterung nach Anspruch 2, **dadurch gekennzeichnet, daß** der Rand des Aufnahmeschachtes (7) zur Erleichterung des Einführens des Ansatzes (6) mit einer Abfasung (9) versehen ist.

5. Handy-Halterung nach einem oder mehreren der vorhergehenden Ansprüche, **dadurch gekennzeichnet, daß** die Verriegelungseinrichtung aus einem am Basisteil (2) angeordneten und mit einer Trägheitsmasse (12, 19) versehenen Sperrglied (11, 18) und einer am Ansatz (6) des Adapters (3) ausgebildeten Ausnehmung (13, 22) für einen Eingriff des Sperrgliedes (11, 18) gebildet ist, oder, daß die Verriegelungseinrichtung aus einem am Basisteil (2) angeordneten und mit einer Trägheitsmasse (31) versehenen Sperrglied (32) und einem am Basisteil (2) angeordneten und in den Ansatz (6) des Adapters (3) eingreifenden Rastriegel (24) mit einer Öffnung (29) gebildet ist, und daß das Sperrglied (11, 18, 32) bei einem Aufprall des Fahrzeuges infolge seiner Trägheit in die Ausnehmung (13, 22) bzw. den Rastriegel (24) einfällt.

6. Handy-Halterung nach Anspruch 5, **dadurch gekennzeichnet, daß** das Basisteil (2) in einer im wesentlichen horizontalen Ebene angeordnet ist, daß das Sperrglied ein am Basisteil (2) in einem Führungskanal (10) verschiebbar angeordneter Stift (11) ist und der Führungskanal (10) im wesentlichen in Fahrzeuglängsrichtung ausgebildet ist und mit seinem vorderen Ende in den Aufnahmeschacht (7) mündet, und daß die Trägheitsmasse (12) auf der dem Ansatz (6) abgewandten Seite am Stift (11) angeordnet ist, wobei an der Trägheitsmasse (12) eine Rückstellfeder (14) mit geringer Federkraft angreift, die den Stift (11) im normalen Fahrbetrieb im Führungskanal (10) hält und deren Federkraft bei einem Frontalaufprall durch die Massenträgheit des mit der Trägheitsmasse (12) versehenen Stiftes (11) überwunden wird.

7. Handy-Halterung nach Anspruch 5, **dadurch gekennzeichnet, daß** das Basisteil (2) in einer im wesentlichen horizontalen Ebene angeordnet ist, daß das Sperrglied ein am Basisteil (2) in einer Kammer (17) im wesentlichen vertikal angeordneter und um eine in Fahrzeugquerrichtung angeordnete Achse (A) schwenkbarer Sperrhebel (18) ist, wobei die Kammer (17) in Fahrzeuglängsrichtung vor dem Aufnahmeschacht (7) ausgebildet und zu diesem (7) offen ist, und daß die Trägheitsmasse (19) im Abstand unterhalb der Achse (A) angeordnet und mit einer Rückstellfeder (21) wirkverbunden ist, die den Sperrhebel (18) im normalen Fahrbetrieb in der vertikalen Position hält und deren Federkraft bei einem Frontalaufprall durch die Massenträgheit überwunden wird, so daß der Sperrhebel (18) mit seinem oberen hakenförmigen Ende in die am Ansatz (6) ausgebildete Ausnehmung (2) einfällt und dort einen vertikal ausgebildeten Ansatz (23) hintergreift.

8. Handy-Halterung nach Anspruch 5, **dadurch gekennzeichnet, daß** das Basisteil (2) in einer im wesentlichen vertikalen Ebene angeordnet ist, daß das Sperrglied ein am Basisteil (2) in einem im wesentlichen in Fahrzeuglängsrichtung ausgebildeten Führungskanal (30) verschiebbar angeordneter Verriegelungsstift (32) ist, daß der Rastriegel (24) in einem am Basisteil (2) ausgebildeten, vertikal angeordneten Führungsschacht (25) verschiebbar gehaltert und auf einem Druckfederelement (26) abgestützt ist, wobei der Führungsschacht (25) mit seinem oberen Ende in den Aufnahmeschacht (7) mündet und das obere Ende des Rastriegels (24) in diesen hineinragt und der Rastriegel (24) mit einer Öffnung (29) versehen ist, die mit dem vor dem Führungsschacht (25) ausgebildeten Führungskanal (30) korrespondiert, daß an der Trägheitsmasse (31) eine Rückstellfeder (33) mit geringer Federkraft angreift, die den Verriegelungsstift (32) im normalen Fahrbetrieb im Führungskanal (30) hält und deren Federkraft bei einem Heckaufprall durch die Massenträgheit des mit der Trägheitsmasse (31) versehenen Verriegelungsstiftes (32) überwunden wird und dieser in die Öffnung (29) einfällt, und daß das obere Ende des Rastriegels (24) in eine Ausnehmung (27) am Ansatz (6) eingreift.

## Claims

1. Mobile telephone holder for a vehicle, having a base part which is connected to the vehicle and having an adapter which can be arranged releasably on said base part and on which the mobile telephone is held and which is locked in a predetermined position on the base part when the mobile telephone is not in use, **characterized in that** the base part (2) and the adapter (3) have mutually corresponding stop elements for locking them together, and **in that** a locking device is formed between the locked adapter (3) and the base part (2), the locking device being activated in an impact and securing the adapter (3) on the base part (2).

2. Mobile telephone holder according to Claim 1, **characterized in that** the stop element which is arranged on the adapter (3) is a projection (6) which is formed on the side facing the base part (2) and has a round or polygonal cross section, and the stop element which is formed on the base part (2) is a receiving shaft (7) for the projection (6), the latter engaging in the receiving shaft (7) to such a depth that the adapter (3) can be separated from the base part (2) only by means of an axial movement, with reference to the receiving shaft (7).

3. Mobile telephone holder according to Claim 1 or 2, **characterized in that**, if the receiving shaft (7) is circular, the base part (2) is provided with a projecting edge (9) formed on at least one circumferential side to rest the adapter (3) on.

4. Mobile telephone holder according to Claim 2, **characterized in that** the edge of the receiving shaft (7) is provided with a bevel (9) to facilitate the introduction of the projection (6).

5. Mobile telephone holder according to one or more of the preceding claims, **characterized in that** the locking device is formed from a blocking element (11, 18) arranged on the base part (2) and provided with a mass of inertia (12, 19), and a recess (13, 22) which is formed on the projection (6) of the adapter (3) and is intended for engagement of the blocking element (11, 18), or **in that** the locking device is formed from a blocking element (32) arranged on the base part (2) and provided with a mass of inertia (31), and a latching bolt (24) which is arranged on the base part (2), engages in the projection (6) of the adapter (3) and has an opening (29), and **in that**, in the event of an impact of the vehicle, the blocking element (11, 18, 32) engages as a consequence of its inertia in the recess (13, 22) or the latching bolt (24).

6. Mobile telephone holder according to Claim 5, **characterized in that** the base part (2) is arranged in an essentially horizontal plane, **in that** the blocking element is a pin (11) which is arranged on the base part (2) in a manner such that it can be displaced in a guide channel (10), and the guide channel (10) is formed essentially in the longitudinal direction of the vehicle and leads with its front end into the receiving shaft (7), and **in that** the mass of inertia (12) is arranged on the pin (11) on the side which faces away from the projection (6), a restoring spring (14) acting on the mass of inertia (12) with a small spring force which keeps the pin (11) in the guide channel (10) during normal driving operation and the spring force of which is overcome, during a frontal impact, by the inertia of the pin (11) provided with the mass of inertia (12).

7. Mobile telephone holder according to Claim 5, **characterized in that** the base part (2) is arranged in an essentially horizontal plane, **in that** the blocking element is a blocking lever (18) which is arranged essentially vertically on the base part (2) in a chamber (17) and can be pivoted about an axis (A) arranged in the transverse direction of the vehicle, the chamber (17) being formed upstream, in the longitudinal direction of the vehicle, of the receiving shaft (7) and being open towards the latter (7), and **in that** the mass of inertia (19) is arranged at a distance below the axis (A) and is operatively connected to a restoring spring (21) which keeps the blocking lever (18) in the vertical position during normal driving operation and the spring force of which is overcome, in the event of a frontal impact, by the inertia, with the result that the blocking lever (18) engages by means of its upper, hook-shaped end in the recess (2) formed on the projection (6) where it engages behind a projection (23) which is formed vertically.

8. Mobile telephone holder according to Claim 5, **characterized in that** the base part (2) is arranged in an essentially vertical plane, **in that** the blocking element is a locking pin (32) arranged on the base part (2) in a manner such that it can be displaced in a guide channel (30) formed essentially in the longitudinal direction of the vehicle, **in that** the latching bolt (24) is secured displaceably in a guide shaft (25), which is formed on the base part (2) and is arranged vertically, and is supported on a compression spring element (26), the guide shaft (25) leading with its upper end into the receiving shaft (7) and the upper end of the latching bolt (24) projecting into said receiving shaft, and the latching bolt (24) being provided with an opening (29) which corresponds with the guide channel (30) formed upstream of the guide shaft (25), **in that** a restoring spring (33) acts on the mass of inertia (31) with a small spring force which keeps the locking pin (32) in the guide channel (30) during normal driving operation and the spring force of which is overcome, in the event of a rear impact, by the inertia of the locking pin (32) provided with the mass of inertia (31), and said locking pin engages in the opening (29), and **in that** the upper end of the latching bolt (24) engages in a recess (27) on the projection (6).

## Revendications

1. Support pour un téléphone portable pour un véhicule, comprenant une partie de base connectée au véhicule et un adaptateur pouvant être disposé de manière desserrable sur celle-ci, sur lequel le téléphone portable est fixé et qui est bloqué dans une position prédéterminée sur la partie de base lorsque le téléphone portable n'est pas utilisé, **caractérisé en ce que** la partie de base (2) et l'adaptateur (3) présentent des éléments de butée en correspondance l'un avec l'autre pour le blocage mutuel, et **en ce qu'**un dispositif de verrouillage est réalisé entre l'adaptateur bloqué (3) et la partie de base (2), lequel est activé en cas de collision et fixe l'adaptateur (3) sur la partie de base (2).

2. Support pour un téléphone portable selon la revendication 1, **caractérisé en ce que** l'élément de butée disposé sur l'adaptateur (3) est une pièce (6) réalisée sur le côté tourné vers la partie de base (2), avec une section transversale ronde ou polygonale, et l'élément de butée disposé sur la partie de base (2) est un orifice de réception (7) pour la pièce (6), cette dernière s'enfonçant dans l'orifice de réception (7) suffisamment profondément pour que l'adaptateur (3) ne puisse être séparé de la partie de base (2) que par un déplacement axial par rapport à l'orifice de réception (7).

3. Support pour un téléphone portable selon la revendication 1 ou 2, **caractérisé en ce que** la partie de base (2) est pourvue, dans le cas d'un orifice de réception circulaire (7), d'un bord (8) saillant vers le haut et réalisé au moins sur un côté périphérique, en vue de l'appui de l'adaptateur (3).

4. Support pour un téléphone portable selon la revendication 2, **caractérisé en ce que** le bord de l'orifice de réception (7) est pourvu d'un biseautage (9) en vue de faciliter l'introduction de la pièce (6).

5. Support pour un téléphone portable selon l'une quelconque ou plusieurs des revendications précédentes, **caractérisé en ce que** le dispositif de verrouillage est constitué d'un organe de blocage (11, 18) disposé sur la partie de base (2) et pourvu d'une masse inertielle (12, 19) et d'un évidement (13, 22) réalisé sur la pièce (6) de l'adaptateur (3) en vue de l'engagement de l'organe de blocage (11, 18), ou **en ce que** le dispositif de verrouillage est constitué d'un organe de blocage (32) disposé sur la partie de base (2) et pourvu d'une masse inertielle (31) et d'un verrou d'encliquetage (24) avec une ouverture (29), disposé sur la partie de base (2) et venant en prise dans la pièce (6) de l'adaptateur (3), et **en ce que** l'organe de blocage (11, 18, 32) tombe sous l'effet de son inertie dans l'évidement (13, 22) ou le verrou d'encliquetage (24) en cas de collision du véhicule.

6. Support pour un téléphone portable selon la revendication 5, **caractérisé en ce que** la partie de base (2) est disposée dans un plan essentiellement horizontal, **en ce que** l'organe de blocage est une tige (11) disposée de manière à pouvoir glisser sur la partie de base (2) dans un canal de guidage (10) et le canal de guidage (10) est réalisé essentiellement dans la direction longitudinale du véhicule et débouche avec son extrémité avant dans l'orifice de réception (7), et **en ce que** la masse inertielle (12) est disposée sur la tige (11) du côté opposé à la pièce (6), un ressort de rappel (14) venant en prise avec une faible force de ressort sur la masse inertielle (12), ce ressort retenant la tige (11) dans le canal de guidage (10) en mode de conduite normal et sa force de ressort étant surmontée dans le cas d'une collision frontale par l'inertie de la masse de la tige (11) pourvue de la masse inertielle (12).

7. Support pour un téléphone portable selon la revendication 5, **caractérisé en ce que** la partie de base (2) est disposée dans un plan essentiellement horizontal, **en ce que** l'organe de blocage est un levier de blocage (18) disposé essentiellement verticalement sur la partie de base (2) dans une chambre (17) et pouvant pivoter autour d'un axe (A) disposé dans la direction transversale du véhicule, la chambre (17) étant réalisée, dans la direction longitudinale du véhicule, avant l'orifice de réception (7) et étant ouverte vers celui-ci (7), et **en ce que** la masse inertielle (19) est disposée à distance sous l'axe (A) et est en liaison coopérante avec un ressort de rappel (21) qui retient le levier de blocage (18) dans la position verticale en mode de conduite normal et dont la force de ressort est surmontée par l'inertie de la masse dans le cas d'une collision frontale, de sorte que le levier de blocage (18) tombe avec son extrémité supérieure en forme de crochet dans l'évidement (2) réalisé sur la pièce (6) et vienne en prise par l'arrière avec une pièce (23) réalisée verticalement à cet endroit.

8. Support pour un téléphone portable selon la revendication 5, **caractérisé en ce que** la partie de base (2) est disposée dans un plan essentiellement vertical, **en ce que** l'organe de blocage est une tige de verrouillage (32) disposée sur la partie de base (2) de manière à pouvoir glisser dans un canal de guidage (30) réalisé essentiellement dans la direction longitudinale du véhicule, **en ce que** le verrou d'encliquetage (24) est maintenu de manière à pouvoir glisser dans un orifice de guidage (25) réalisé sur la partie de base (2) et disposé verticalement et est supporté sur un élément de ressort de compression (26), l'orifice de guidage (25) débouchant avec son extrémité supérieure dans l'orifice de réception (7) et l'extrémité supérieure du verrou d'encliquetage (24) pénétrant dans celui-ci et le verrou d'encliquetage (24) étant pourvu d'une ouverture (29) qui correspond au canal de guidage (30) réalisé avant l'orifice de guidage (25), **en ce qu'**un ressort de rappel (33) vient en prise avec une faible force de ressort avec la masse inertielle (31) et retient la tige de verrouillage (32) dans le canal de guidage (30) en mode de conduite normal et dont la force de ressort est surmontée par l'inertie de masse de la tige de verrouillage (32) pourvue de la masse inertielle (31) en cas de collision arrière et cette tige de verrouillage tombant dans l'ouverture (29), et **en ce que** l'extrémité supérieure du verrou d'encliquetage (24) vient en prise dans un évidement (27) sur la pièce (6).
